# EUROPEAN PATENT APPLICATION

(11) **EP 4 411 970 A1**
(43) Date of publication of application: **07.08.2024**
(21) Application number: 22876390.0
(22) Date of filing: 28.09.2022
(51) Int. Cl.: H01M 50/533, H01M 10/18, H01M 50/15, H01M 50/176, H01M 50/186, H01M 50/193, H01M 50/474, H01M 50/477, H01M 50/531, H01M 50/571

(54) **BIPOLAR STORAGE BATTERY**

(30) Priority: 30.09.2021 JP 2021161020; 30.09.2021 JP 2021161021
(71) Applicant: The Furukawa Battery Co., Ltd., Yokohama-shi, Kanagawa-ken 240-0006 (JP); FURUKAWA ELECTRIC CO., LTD., Tokyo 100-8322 (JP)
(72) Inventor: SHIBATA, Satoshi, Jyoban-shimofunao-machi, Iwaki-shi, Fukushima 972- 8501 (JP); YOSHIDA, Hideaki, Nikko-shi, Tochigi 321-2336 (JP); HIROTA, Kenji, Jyoban-shimofunao-machi, Iwaki-shi, Fukushima 972- 8501 (JP)
(74) Representative: Grünecker Patent- und Rechtsanwälte PartG mbB
(86) International application number: PCT/JP2022/036287
(87) International publication number: WO 2023/054524

(57) **Abstract**

Provided is a bipolar storage battery in which a connection portion of a terminal with a lug portion of a current collector plate is difficult to corrode. The bipolar storage battery includes a lid (150) covering surrounding portions (122a, 132a, 142a) of frame bodies (122, 132, 142) surrounding one of side surfaces of each cell member (110), and a positive electrode terminal component (160) and a negative electrode terminal component (170) including connection surfaces (161a, 171a) exposed to an outer surface of the lid, in which a positive electrode current collector plate (111aa) constituting one of the cell members (110) includes a positive electrode lug portion (11), the positive electrode lug portion is connected with the positive electrode terminal component (160) at a point ahead of a location where the positive electrode lug portion penetrates the surrounding portion (132a) and the lid, a negative electrode current collector plate (112aa) constituting one of the cell members includes a negative electrode lug portion (12), and the negative electrode lug portion is connected with the negative electrode terminal component (170) at a point ahead of a location where the negative electrode lug portion penetrates the surrounding portion (142a) and the lid.

## Description

### Technical Field

The present invention relates to a bipolar storage battery.

### Background Art

In recent years, power generation facilities using natural energy such as sunlight and wind power have increased. In such power generation facilities, since the amount of power generation can be hardly controlled, the power load is leveled by using a storage battery. In other words, when the amount of power generation is larger than a consumption, a difference is charged into the storage battery, and when the amount of power generation is smaller than a consumption, a difference is discharged from the storage battery. As the storage battery described above, a lead-acid storage battery is frequently used from a viewpoint of economic efficiency, safety, and the like. As such a conventional lead-acid storage battery, for example, a double-poled battery (bipolar storage battery) described in PTL 1 below is known.

The bipolar storage battery has a resin substrate attached to the inside of a picture frame-like resin frame. Lead layers are arranged on two surfaces of the substrate. A positive active material layer is adjacent to the lead layer formed on one surface of the substrate, and a negative active material layer is adjacent to the lead layer formed on the other surface of the substrate. In addition, a picture frame-like resin spacer is provided, and a glass mat impregnated with an electrolytic solution is disposed inside the spacer. Then, a plurality of frames and spacers are alternately stacked, and the frames and the spacers are bonded to each other with an adhesive or the like. In addition, the lead layers formed on the two surfaces of the substrate are connected via a through-hole provided in the substrate.

In other words, the bipolar storage battery described in PTL 1 includes: a plurality of cell members each including a positive electrode including a positive electrode current collector plate and a positive active material layer, a negative electrode including a negative electrode current collector plate and a negative active material layer, and a separator (glass mat) interposed between the positive electrode and the negative electrode, the plurality of cell members being arranged in a stacked manner with intervals; and a plurality of space forming members forming a plurality of spaces for individually accommodating the plurality of cell members.

In addition, the space forming members each include a substrate covering at least one of a side of the positive electrode and a side of the negative electrode of the cell member, and a frame body (frame portions of a bipolar plate and an end plate and the spacer) surrounding all side surfaces of the cell member. In addition, the cell member and the substrate of the space forming member are alternately arranged in a stacked state, the cell members are electrically connected with each other in series, and adjacent frame bodies are joined to each other.

Furthermore, PTL 1 describes an example in which a protective case is provided, and in this example, a surrounding portion of the frame body surrounding one side surface of the cell member is covered with a lid (a member indicated by the reference numeral 202 in FIG. 5 of PTL 1), and an electrode receiving space is formed between the lid and the battery main body. A tip of a lug portion of the current collector plate constituting the cell member arranged at one end in a stacking direction is bent, and this bent portion is connected with a terminal protruding from the lid to the outside in the electrode receiving space.

### Citation List

### Patent Literature

PTL 1: JP 6124894 B2

### Summary of Invention

### Technical Problem

In the example of the bipolar storage battery described in PTL 1 in which the protective case is provided, since the bent portion of the lug portion of the current collector plate constituting the cell member arranged at one end in the stacking direction, and the terminal protruding from the lid to the outside are connected in the electrode receiving space, there is a possibility that the connection portion of the terminal with the lug portion may be corroded and the battery performance may be deteriorated (for example, the life may be shortened, the internal resistance may be increased, or the battery capacity may be lowered) for a reason that, for example, the electrolytic solution reaches the electrode receiving space along the current collector plate due to the capillary phenomenon.

An object of the present invention is to provide a bipolar storage battery in which a connection portion of a terminal with a lug portion of a current collector plate is difficult to corrode.

### Solution to Problem

In order to solve the problems described above, a first aspect of the present invention is a bipolar storage battery having the following configurations (1) to (4).
(1) A bipolar storage battery includes: a plurality of cell members each including a positive electrode including a positive electrode current collector plate and a positive active material layer, a negative electrode including a negative electrode current collector plate and a negative active material layer, and a separator interposed between the positive electrode and the negative electrode, the plurality of cell members being arranged in a stacked manner with intervals; and a plurality of space forming members forming a plurality of spaces for individually accommodating the plurality of cell members. An electrolytic solution is present in the spaces.
(2) The space forming members each include a substrate covering both a side of the positive electrode and a side of the negative electrode of one of the cell members, and a frame body surrounding side surfaces of one of the cell members. The cell members and the substrates of the space forming members are alternately arranged in a stacked state. The adjacent frame bodies are joined.
(3) The bipolar storage battery includes a lid covering a surrounding portion of the frame body surrounding one of the side surfaces of each cell member, and a positive electrode terminal component and a negative electrode terminal component each including a connection surface exposed to an outer surface of the lid.
(4) The positive electrode current collector plate constituting one of the cell members includes a positive electrode lug portion, and the positive electrode lug portion is connected with the positive electrode terminal component at a point ahead of a location where the positive electrode lug portion penetrates the surrounding portion and the lid. The negative electrode current collector plate constituting one of the cell members includes a negative electrode lug portion, and the negative electrode lug portion is connected with the negative electrode terminal component at a point ahead of a location where the negative electrode lug portion penetrates the surrounding portion and the lid.

In order to solve the problems described above, a second aspect of the present invention is a bipolar storage battery having the following configurations (11) to (15).

(11) A bipolar storage battery includes: a plurality of cell members each including a positive electrode including a positive electrode current collector plate and a positive active material layer, a negative electrode including a negative electrode current collector plate and a negative active material layer, and a separator interposed between the positive electrode and the negative electrode, the plurality of cell members being arranged in a stacked manner with intervals; and a plurality of space forming members forming a plurality of spaces for individually accommodating the plurality of cell members. An electrolytic solution is present in the spaces.

(12) The space forming members each include a substrate covering both a side of the positive electrode and a side of the negative electrode of one of the cell members, and a frame body surrounding side surfaces of one of the cell members. The cell members and the substrates of the space forming members are alternately arranged in a stacked state. The adjacent frame bodies are joined.

(13) The bipolar storage battery includes a lid covering a surrounding portion of the frame body surrounding one of the side surfaces of each cell member, and a positive electrode terminal component and a negative electrode terminal component each including a connection surface exposed to an outer surface of the lid.

(14) The positive electrode current collector plate constituting one of the cell members includes a positive electrode lug portion, the negative electrode current collector plate constituting one of the cell members includes a negative electrode lug portion, and each of the positive electrode lug portion and the negative electrode lug portion includes a bent portion at a point ahead of a location where the positive electrode lug portion or the negative electrode lug portion penetrates the surrounding portion and the lid.

(15) Each of the positive electrode terminal component and the negative electrode terminal component includes a terminal portion including the connection surface and a linking portion with which the bent portion is connected, in different regions in a plan view. The bent portion of the positive electrode lug portion is connected with the linking portion of the positive electrode terminal component, and the bent portion of the negative electrode lug portion is connected with the linking portion of the negative electrode terminal component.

### Advantageous Effects of Invention

According to the bipolar storage battery of the present invention, it can be expected that the connection portions of the terminals (the positive electrode terminal component and the negative electrode terminal component) with the lug portions (the positive electrode lug portion and the negative electrode lug portion) of the current collectors become difficult to corrode.

### Brief Description of Drawings

FIG. 1 is a cross-sectional view illustrating a bipolar lead-acid storage battery that is a first embodiment of a bipolar storage battery of the present invention;
FIG. 2 is a plan view illustrating a positive electrode terminal component and a negative electrode terminal component included in the first to third embodiments of the bipolar storage battery of the present invention;
FIG. 3 is a cross-sectional view illustrating a bipolar lead-acid storage battery that is the second embodiment of the bipolar storage battery of the present invention;
FIG. 4 is a cross-sectional view illustrating a bipolar lead-acid storage battery that is the third embodiment of the bipolar storage battery of the present invention; and
FIG. 5 is a plan view illustrating a terminal component usable as the positive electrode terminal component and the negative electrode terminal component.

### Description of Embodiments

Hereinafter, embodiments of the present invention will be described, but the present invention is not limited to the embodiments described below. In the embodiments described below, technically preferable limitations are made to implement the present invention, but these limitations are not essential requirements of the present invention.

### [First Embodiment]

### [Overall Configuration]

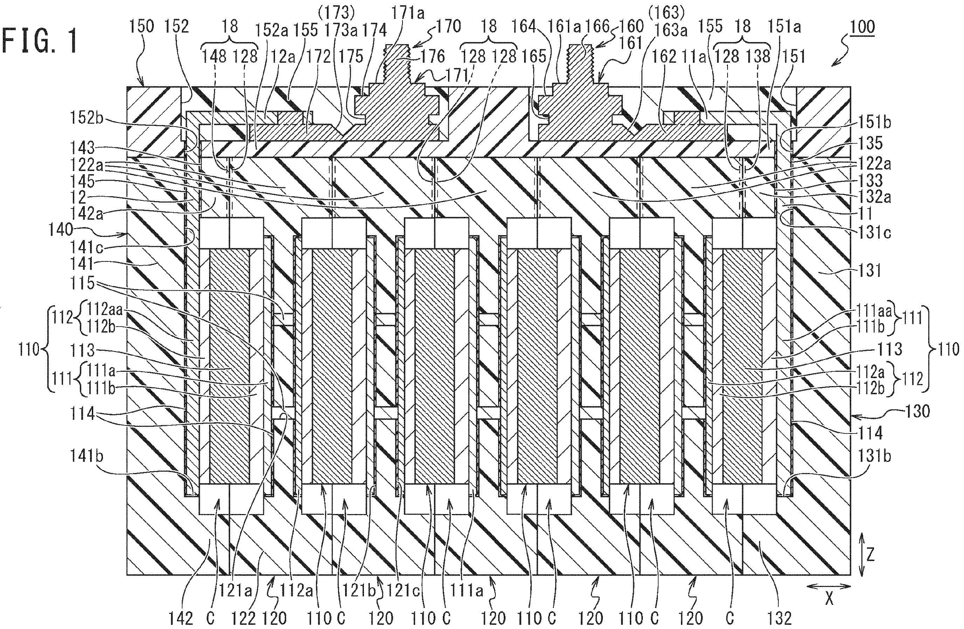

As illustrated in FIG. 1, a bipolar lead-acid storage battery 100 of the first embodiment includes a plurality of cell members 110, a plurality of biplates (space forming members) 120, a first end plate (space forming member) 130, a second end plate (space forming member) 140, a lid 150, a positive electrode terminal component 160, and a negative electrode terminal component 170. FIG. 1 illustrates the bipolar lead-acid storage battery 100 in which six cell members 110 are stacked, but the number of cell members 110 is determined depending on battery design. In addition, the number of the biplates 120 is specified according to the number of cell members 110.

Here, a stacking direction of the cell members 110 is defined as an X direction (the left-right direction in FIG. 1), and a direction that is perpendicular to the X direction and is an up-down direction in an installed state is defined as a Z direction (the up-down direction in FIG. 1).

The lid 150 covers an upper end surface of the battery main body formed in a substantially rectangular parallelepiped shape and includes recesses 151 and 152 line-symmetric with respect to the center in the X direction on an upper surface, where the positive electrode terminal component 160 is arranged in the recess 151, and the negative electrode terminal component 170 is arranged in the recess 152. Through-holes 151b and 152b are formed in bottom plates 151a and 152a of the recesses 151 and 152. The through-hole 151b is formed at a position in an upper part of the first end plate 130, and the through-hole 152b is formed at a position in an upper part of the second end plate 140.

The cell member 110 includes a positive electrode 111, a negative electrode 112, and a separator (electrolyte layer) 113. The separator 113 is impregnated with an electrolytic solution. The positive electrode 111 includes a positive electrode lead foil (positive electrode current collector plate) 111a or 111aa and a positive active material layer 111b. The negative electrode 112 includes a negative electrode lead foil (negative electrode current collector plate) 112a or 112aa and a negative active material layer 112b. The separator 113 is interposed between the positive electrode 111 and the negative electrode 112. In the cell member 110, the positive electrode lead foil 111a or 111aa, the positive active material layer 111b, the separator 113, the negative active material layer 112b, and the negative electrode lead foil 112a or 112aa are stacked in this order.

A dimension (thickness) in the X direction is larger (thicker) in the positive electrode lead foil 111a than in the negative electrode lead foil 112a and is larger (thicker) in the positive active material layer 111b than in the negative active material layer 112b.

The plurality of cell members 110 is arranged in a stacked manner with intervals in the X direction, and a substrate 121 of the biplate 120 is arranged in this interval portion. That is, the plurality of cell members 110 are stacked with the substrate 121 of the biplate 120 sandwiched between the cell members 110. In addition, the positive electrode lead foil 111aa constitutes the cell member 110 arranged at one end in the stacking direction, and the negative electrode lead foil 112aa constitutes the cell member 110 arranged at the other end in the stacking direction.

The plurality of biplates 120, the first end plate 130, and the second end plate 140 are members for forming a plurality of spaces (cells) C for individually accommodating the plurality of cell members 110.

The biplate 120 includes the substrate 121 having a rectangular planar shape, a frame body 122 arranged outside four end surfaces of the substrate 121 and surrounding four side surfaces of the cell member 110, and one or a plurality of column portions (not illustrated) vertically protruding from two surfaces of the substrate 121, and the substrate 121, the frame body 122, and the column portions are integrally formed of a synthetic resin such as acrylonitrile-butadiene-styrene copolymer (ABS).

In the X direction, a dimension of the frame body 122 is larger than a dimension (thickness) of the substrate 121, and a dimension between protruding end surfaces of the column portion is the same as the dimension of the frame body 122. Then, the space C is formed between the substrate 121 and the substrate 121 by arranging the plurality of biplates 120 in a stacked manner with the frame bodies 122 and the column portions in contact with each other, and a dimension of the space C in the X direction is maintained by the column portions that are in contact with each other.

A through-hole (not illustrated) for the column portion to penetrate through is formed in each of the positive electrode lead foil 111a or 111aa, the positive active material layer 111b, the negative electrode lead foil 112a or 112aa, the negative active material layer 112b, and the separator 113.

The substrate 121 of the biplate 120 has a plurality of through-holes 121a penetrating a plate surface. A first recess 121b is formed on one surface of the substrate 121, and a second recess 121c is formed on the other surface of the substrate 121. A depth of the first recess 121b is deeper than a depth of the second recess 121c. Dimensions of the first recess 121b and the second recess 121c in the X direction and a Y direction is made correspondent to the dimensions of the positive electrode lead foil 111a and the negative electrode lead foil 112a in the X direction and the Y direction.

The substrate 121 of the biplate 120 is arranged between the cell members 110 neighboring to each other in the X direction. The substrate 121 of the biplate 120 is a substrate that covers both a side of the positive electrode 111 of one cell member 110 and a side of the negative electrode 112 of another cell member 110 next to the one cell member 110. The positive electrode lead foil 111a of the cell member 110 is arranged in the first recess 121b of the substrate 121 of the biplate 120 via an adhesive layer 114.

In addition, the negative electrode lead foil 112a of the cell member 110 is arranged in the second recess 121c of the substrate 121 of the biplate 120 via the adhesive layer 114.

An electrical conductor 115 is arranged in the through-hole 121a of the substrate 121 of the biplate 120, and two end surfaces of the electrical conductor 115 are in contact with and coupled to the positive electrode lead foil 111a and the negative electrode lead foil 112a. That is, the positive electrode lead foil 111a and the negative electrode lead foil 112a are electrically connected by the electrical conductor 115. As a result, all of the plurality of cell members 110 are electrically connected in series.

In addition, the frame body 122 of the substrate 121 has surrounding portions surrounding the respective four side surfaces of the cell member 110, and in a surrounding portion 122a surrounding a side surface (one of the side surfaces) on an upper side in the Z direction among the surrounding portions, a groove 128 stretching from an outer side surface to an inner side surface of the surrounding portion 122a is formed in one end surface in the X direction at a position different from the position of the cross section illustrated in FIG. 1, as indicated by the broken line in FIG. 1.

The first end plate 130 includes a substrate 131 covering a side of the positive electrode of the cell member 110, a frame body 132 surrounding the four side surfaces of the cell member 110, and one or a plurality of column portions (not illustrated) vertically protruding from one surface of the substrate 131 (a surface facing the substrate 121 of the biplate 120 arranged closest to the side of the positive electrode). A planar shape of the substrate 131 is rectangular, the frame body 132 is arranged outside four end surfaces of the substrate 131, and the substrate 131, the frame body 132, and the column portions are integrally formed of a synthetic resin such as ABS.

In the X direction, a dimension of the frame body 132 is larger than a dimension (thickness) of the substrate 131, and a dimension between protruding end surfaces of the column portion is the same as the dimension of the frame body 132. Then, the space C is formed between the substrate 121 of the biplate 120 and the substrate 131 of the first end plate 130 by arranging the frame body 132 and the column portions in a stacked manner in contact with the frame body 122 and the column portions of the biplate 120 arranged on an outermost side (positive electrode side), and a dimension of the space C in the X direction is maintained by the column portion of the biplate 120 and the column portion of the first end plate 130 in contact with each other.

A through-hole (not illustrated) for the column portion to penetrate through is formed in each of the positive electrode lead foil 111aa, the positive active material layer 111b, and the separator 113 of the cell member 110 arranged at one end in the stacking direction.

A recess 131b is formed on one surface of the substrate 131 of the first end plate 130. A dimension of the recess 131b in the X direction is made correspondent to a dimension of the positive electrode lead foil 111aa in the X direction. The dimension of the positive electrode lead foil 111aa arranged on one surface of the substrate 131 of the first end plate 130 in the X direction is larger than a dimension of the positive electrode lead foil 111a arranged on one surface of the substrate 121 of the biplate 120 in the X direction. The positive electrode lead foil 111aa includes a positive electrode lug portion 11.

The frame body 132 has surrounding portions surrounding the respective four side surfaces of the cell member 110, and a through-hole 133 extending in the Z direction is formed in a surrounding portion (a portion covered with the lid) 132a surrounding a side surface (one of the side surfaces) on an upper side in the Z direction, among the surrounding portions. In addition, as indicated by the broken line in FIG. 1, a groove 138 stretching from an outer side surface to an inner side surface of the surrounding portion 132a is formed in one end surface of the surrounding portion 132a in the X direction at a position different from the position of the cross section illustrated in FIG. 1. Furthermore, a lug portion arrangement recess 131c that is continuous with the through-hole 133 and stretches to the recess 131b is formed on one surface of the substrate 131. As indicated by the broken line in FIG. 1, the groove 128 stretching from the outer side surface to the inner side surface of the surrounding portion 122a is formed.

A portion of the positive electrode lead foil 111aa other than the positive electrode lug portion 11 is arranged in the recess 131b of the substrate 131 via the adhesive layer 114, a base portion of the positive electrode lug portion 11 is arranged in the lug portion arrangement recess 131c of the substrate 131, and an intermediate portion of the positive electrode lug portion 11 penetrates through the through-hole 133 of the frame body 132 of the first end plate 130 and the through-hole 151b of the bottom plate 151a of the lid 150. Then, a tip portion of the positive electrode lug portion 11 is bent at a substantially right angle inside the recess 151 of the lid 150.

That is, the positive electrode lug portion 11 includes a bent portion 11a at a point ahead of a location where the positive electrode lug portion 11 penetrates the surrounding portion 132a of the frame body 132 constituting the first end plate 130 and the bottom plate 151a of the recess 151 of the lid 150. Then, the bent portion 11a of the positive electrode lug portion 11 is connected with the positive electrode terminal component 160. In addition, a gap between the positive electrode lug portion 11, and the through-hole 133 of the frame body 132 and the through-hole 151b of the lid 150 is sealed with a synthetic resin 135 made of an epoxy resin. Furthermore, the inside of the recess 151 of the lid 150 is sealed with a synthetic resin 155 made of an epoxy resin.

The second end plate 140 includes a substrate 141 covering a side of the negative electrode of the cell member 110, a frame body 142 surrounding the four side surfaces of the cell member 110, and one or a plurality of column portions (not illustrated) vertically protruding from one surface of the substrate 141 (a surface facing the substrate 121 of the biplate 120 arranged closest to the side of the negative electrode). A planar shape of the substrate 141 is rectangular, the frame body 142 is arranged outside four end surfaces of the substrate 141, and the substrate 141, the frame body 142, and the column portions are integrally formed of a synthetic resin such as ABS.

In the X direction, a dimension of the frame body 142 is larger than a dimension (thickness) of the substrate 141, and a dimension between two protruding end surfaces of a column portion 143 is the same as the dimension of the frame body 142. Then, the space C is formed between the substrate 121 of the biplate 120 and the substrate 141 of the second end plate 140 by arranging the frame body 142 and the column portions in a stacked manner in contact with the frame body 122 and the column portions of the biplate 120 arranged on an outermost side (negative electrode side), and a dimension of the space C in the X direction is maintained by the column portion of the biplate 120 and the column portion of the second end plate 140 in contact with each other.

A through-hole (not illustrated) for the column portion 143 to penetrate through is formed in each of the negative electrode lead foil 112aa, the negative active material layer 112b, and the separator 113 of the cell member 110 arranged at the other end in the stacking direction.

A recess 141b is formed on one surface of the substrate 141 of the second end plate 140. A dimension of the recess 141b in the X direction is made correspondent to a dimension of the negative electrode lead foil 112aa in the X direction. The dimension of the negative electrode lead foil 112aa arranged on one surface of the substrate 141 of the second end plate 140 in the X direction is larger than a dimension of the negative electrode lead foil 112a arranged on the other surface of the substrate 121 of the biplate 120 in the X direction. The negative electrode lead foil 112aa includes a negative electrode lug portion 12.

The frame body 142 has surrounding portions surrounding the respective four side surfaces of the cell member 110, and a through-hole 143 extending in the Z direction is formed in a surrounding portion 142a surrounding a side surface (one of the side surfaces) on an upper side in the Z direction, among the surrounding portions. In addition, as indicated by the broken line in FIG. 1, a groove 148 stretching from an outer side surface to an inner side surface of the surrounding portion 142a is formed in one end surface of the surrounding portion 142a in the X direction at a position different from the position of the cross section illustrated in FIG. 1. Furthermore, a lug portion arrangement recess 141c that is continuous with the through-hole 143 and stretches to the recess 141b is formed on one surface of the substrate 141.

A portion of the negative electrode lead foil 112aa other than the negative electrode lug portion 12 is arranged in the recess 141b of the substrate 141 via the adhesive layer 114, a base portion of the negative electrode lug portion 12 is arranged in the lug portion arrangement recess 141c of the substrate 141, and an intermediate portion of the negative electrode lug portion 12 penetrates through the through-hole 143 of the frame body 142 of the second end plate 140 and the through-hole 152b of the bottom plate 152a of the lid 150. Then, a tip portion of the negative electrode lug portion 12 is bent at a substantially right angle inside the recess 152 of the lid 150.

That is, the negative electrode lug portion 12 includes a bent portion 12a at a point ahead of a location where the negative electrode lug portion 12 penetrates the surrounding portion 142a of the frame body 142 constituting the second end plate 140 and the bottom plate 152a of the recess 152 of the lid 150. Then, the bent portion 12a of the negative electrode lug portion 12 is connected with the negative electrode terminal component 170. In addition, a gap between the negative electrode lug portion 12, and the through-hole 143 of the frame body 142 and the through-hole 152b of the lid 150 is sealed with a synthetic resin 145 made of an epoxy resin. Furthermore, the inside of the recess 152 of the lid 150 is sealed with the synthetic resin 155 made of an epoxy resin.

The positive electrode lead foils (positive electrode current collector plates) 111a and 111aa are formed of, for example, a lead alloy in which a content of tin (Sn) is 1.0% by mass or more but less than 2.0% by mass, a content of calcium (Ca) is 0.005% by mass or more but less than 0.030% by mass, and the rest is lead (Pb) and unavoidable impurities.

The negative electrode lead foils (negative electrode current collector plates) 121a and 112aa are formed of, for example, a lead alloy in which a content of tin (Sn) is 0.5% by mass or more but equal to or less than 2% by mass.

Note that, as can be seen from the above description, the biplate 120 is a space forming member including the substrate 121 covering both a side of the positive electrode and a side of the negative electrode of the cell member 110 and the frame body 122 surrounding all side surfaces of the cell member 110. The first end plate 130 is a space forming member including the substrate 131 covering only a side of the positive electrode (one of a side of the positive electrode and a side of the negative electrode) of the cell member 110 and the frame body 132 surrounding all side surfaces of the cell member 110.

The second end plate 140 is a space forming member including the substrate 141 covering only a side of the negative electrode (one of a side of the positive electrode and a side of the negative electrode) of the cell member 110 and the frame body 142 surrounding all side surfaces of the cell member 110. That is, each of the substrates 121, 131, and 141 is a substrate covering at least one of a side of the positive electrode and a side of the negative electrode of the cell member 110, and the substrate 121 is a substrate covering both the side of the positive electrode and the side of the negative electrode of the cell member 110.

In addition, at a position different from the position of the cross section illustrated in FIG. 1, liquid injection holes 18 each stretching from the outer side surface to the inner side surface of the surrounding portions 122a, 132a, or 142a are formed by two grooves 128 included in the surrounding portions 122a of the adjacent biplates 120, and the grooves 138 and 148 included in the surrounding portions 132a and 142a of the first end plate 130 and the second end plate 140 and the grooves 128 that are adjacent to the grooves 138 and 148 and included in the surrounding portions 122a of the biplates 120. Each liquid injection hole 18 is continuous with each liquid inlet provided in the lid 150. An electrolytic solution is present in each space C, and the separator 113 is in an impregnated state with the electrolytic solution.

### [Structure of Terminal Component]

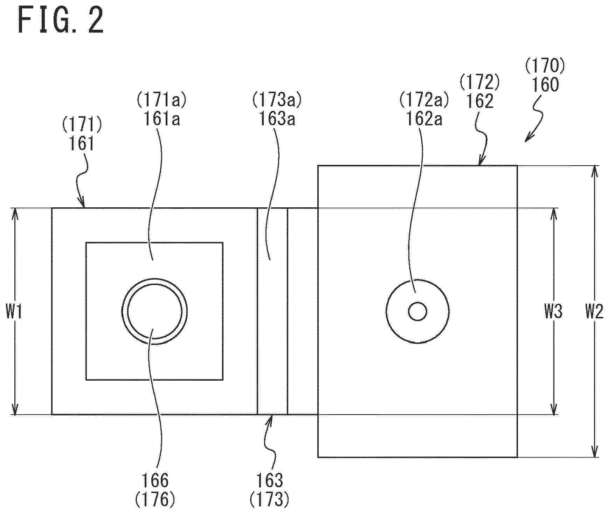

As illustrated in FIGS. 1 and 2, the positive electrode terminal component 160 includes a terminal portion 161 including a connection surface 161a with an external terminal and a linking portion 162 with which the bent portion 11a of the positive electrode lug portion 11 is connected, in different regions in a plan view. An intermediate portion 163 is provided between the terminal portion 161 and the linking portion 162. A V-shaped groove 163a is formed on an upper surface of the intermediate portion 163. That is, the positive electrode terminal component 160 includes, between the terminal portion 161 and the linking portion 162, the intermediate portion 163 having a surface lower than an upper surface of the linking portion 162 (a surface on an opposite side of the surrounding portion 132a).

A width W2 of the linking portion 162 in a plan view is the same as or larger than a width of the bent portion 11a of the positive electrode lug portion 11. A width W1 of the terminal portion 161 in a plan view and a width W3 of the intermediate portion 163 in a plan view are the same, and the width W2 of the linking portion 162 in a plan view is larger than the width W1 of the terminal portion 161 in a plan view. That is, a portion between the terminal portion 161 and the linking portion 162 is formed to have a width narrower than the width of the linking portion 162 in a plan view.

FIG. 1 illustrates a cross section at a center position in a direction perpendicular to the X direction and the Z direction. As can be seen from FIG. 1, the terminal portion 161 includes a protrusion portion 164 extending in a thickness direction of the lid 150. The connection surface 161a is formed at a tip of the protrusion portion 164, and a narrowed portion 165 is formed at a base portion of the protrusion portion 164. That is, an upper surface of the protrusion portion 164 serves as the connection surface 161a, and a vertically standing screw shaft 166 is formed at a center of the connection surface 161a.

As illustrated in FIG. 2, a truncated cone-shaped projection 162a standing vertically is formed on an outer surface of the linking portion 162 before assembly. Note that a through-hole through which the truncated cone-shaped projection 162a passes is provided at a tip portion of the positive electrode lug portion 11 before assembly.

The positive electrode terminal component 160 other than the screw shaft 166 is, for example, a cast product made of lead or a lead alloy, and the screw shaft 166 made of brass is integrated (insert-molded) at the time of casting.

The negative electrode terminal component 170 is the same as the positive electrode terminal component 160 and has a terminal portion 171 including a connection surface 171a, a linking portion 172, and an intermediate portion 173, and a V-shaped groove 173a is formed on an upper surface of the intermediate portion 173. The terminal portion 171 includes a protrusion portion 174 protruding from a plane including an outer surface of the linking portion 172 (a surface on an opposite side of the battery main body), and the protrusion portion 174 includes a narrowed portion 175. An upper surface of the protrusion portion 174 serves as the connection surface 171a, and a screw shaft 176 protrudes from a center of the connection surface 171a.

When the bipolar lead-acid storage battery 100 is used, for example, respective round terminals connected to a positive electrode wiring line and a negative electrode wiring line are fitted to the screw shafts 166 and 176 of the positive electrode terminal component 160 and the negative electrode terminal component 170, and nuts are screwed and fastened to the screw shafts 166 and 176, whereby the bipolar lead-acid storage battery 100 is connected with the positive electrode wiring line and the negative electrode wiring line.

### [Manufacturing Method]

When the bipolar lead-acid storage battery 100 is manufactured, first, the battery main body is assembled in a state in which tips of the positive electrode lug portion 11 and the negative electrode lug portion 12 extend upward in the Z direction.

The battery main body is assembled by, for example, the following method.

First, the positive electrode lead foil 111a is fixed to the first recess 121b and the negative electrode lead foil 112a is fixed to the second recess 121c of the biplate 120 with an adhesive, and the positive electrode lead foil 111a and the negative electrode lead foil 112a are connected by the electrical conductor 115 by a resistance welding method.

Next, in a state in which the tip portion of the positive electrode lug portion 11 of the positive electrode lead foil 111aa appears outside after passing through the through-hole 133 of the frame body 132 of the first end plate 130, the base portion of the positive electrode lug portion 11 is fixed to the lug portion arrangement recess 131c of the substrate 131, and the portion other than the positive electrode lug portion 11 is fixed to the recess 131b of the substrate 131, each with an adhesive.

In addition, in a state in which the tip portion of the negative electrode lug portion 12 of the negative electrode lead foil 112aa appears outside after passing through the through-hole 143 of the frame body 142 of the second end plate 140, the base portion of the negative electrode lug portion 12 is fixed to the lug portion arrangement recess 141c of the substrate 141, and the portion other than the negative electrode lug portion 12 is fixed to the recess 141b of the substrate 141, each with an adhesive.

In this manner, each plate to which each lead foil is fixed is obtained.

Next, repeatedly in the order of the first end plate 130 and all the biplates 120, the positive active material layer, the separator, and the negative active material layer are placed on the positive electrode lead foil fixed to each plate, and the plates are stacked and joined to each other by a vibration welding method. Finally, the negative electrode lead foil of the second end plate 140 is placed on the negative active material layer of the biplate 120, and the second end plate 140 is joined to the biplate 120 by a vibration welding method. Specifically, the facing surfaces of the frame bodies and the column portions of the substrates serve as joining surfaces to form each of the spaces (cells) C, and a state in which one cell member 110 is arranged in one cell C is achieved. In addition, the liquid injection holes 18 are formed by vibration welding on edge portions of the grooves 128, 138, and 148.

Next, the lid 150 is arranged in an upper part of the battery main body in the Z direction, and the lid 150 is put on an upper surface of the battery main body in the Z direction and thermally welded while tips of the positive electrode lug portion 11 and the negative electrode lug portion 12 are passed through the through-holes 151b and 152b of the lid 150. Next, a sealing agent is injected from the through-holes 151b and 152b toward the through-hole 133 to seal between the through-holes 151b and 152b and the positive electrode lug portion 11 and the negative electrode lug portion 12 and between the intermediate portion of the positive electrode lug portion 11 and the through-hole 133 of the frame body 132 with the synthetic resin 135.

Next, the positive electrode terminal component 160 and the negative electrode terminal component 170 are installed in the recesses 151 and 152 of the lid 150, respectively, and are fixed to upper surfaces of the bottom plates 151a and 152a with an adhesive. Next, the tip portions of the positive electrode lug portion 11 and the negative electrode lug portion 12 are bent at predetermined positions and arranged on top of the linking portions 162 and 172 of the positive electrode terminal component 160 and the negative electrode terminal component 170, respectively. At this time, the truncated cone-shaped projections 162a and 172a are made to pass through the through-holes in the tip portions of the positive electrode lug portion 11 and the negative electrode lug portion 12. Next, the truncated cone-shaped projections 162a and 172a are melted by a burner or the like, whereby the positive electrode lug portion 11 and the negative electrode lug portion 12 are connected with the linking portions 162 and 172, respectively.

Next, an electrolytic solution is injected to the inside of each cell C from each liquid inlet of the lid 150 via each liquid injection hole 18 of the battery main body, and then each liquid inlet of the lid 150 is closed.

### [Action and Effect]

As described above, in the bipolar lead-acid storage battery 100 of the first embodiment, the tips of the positive electrode lug portion 11 and the negative electrode lug portion 12 are connected with the linking portion 162 and 172 of the positive electrode terminal component 160 and the negative electrode terminal component 170 at points ahead of locations where the tips of the positive electrode lug portion 11 and the negative electrode lug portion 12 penetrate the surrounding portions 132a and 142a of the first end plate 130 and the second end plate 140 and the bottom plates 151a and 152a of the lid 150. That is, in the bipolar lead-acid storage battery 100 of the first embodiment, the current collector plate and the terminal are connected at a position different from a position where there is a high risk of coming into contact with the electrolytic solution that has been raised along the current collector plate due to the capillary phenomenon, such as a space between the battery main body and the lid (electrode receiving space of PTL 1), (a position away from the position where there is a high risk).

As a consequence of this, in the bipolar lead-acid storage battery 100 of the first embodiment, the connection portions (the linking portions 162 and 172 of the positive electrode terminal component 160 and the negative electrode terminal component 170) of the terminals with the lug portions of the current collectors (the bent portions 11a and 12a of the positive electrode lug portion 11 and the negative electrode lug portion 12) are difficult to corrode because of the electrolytic solution raised along the current collector plate due to the capillary phenomenon.

In addition, since the through-holes (the through-holes 133 and 143 of the surrounding portions 132a and 142a and the through-holes 151b and 152b of the lid 150) for the positive electrode lug portion 11 and the negative electrode lug portion 12 to pass through are sealed with the synthetic resins 135 and 145, a structure that makes it difficult for the electrolytic solution that has been raised along the current collector plate due to the capillary phenomenon to enter the inside of the recess of the lid 150 is achieved.

In addition, since the lid 150 includes the recesses 151 and 152, the positive electrode lug portion 11 and the negative electrode lug portion 12 include the bent portions 11a and 12a, and the bent portions 11a and 12a of the positive electrode lug portion 11 and the negative electrode lug portion 12 and the linking portions 162 and 172 of the positive electrode terminal component 160 and the negative electrode terminal component 170 are connected inside the recesses 151 and 152 of the lid 150, the thickness (the dimension in the Z direction) of the lid 150 can be reduced while the lengths of the positive electrode lug portion 11 and the negative electrode lug portion 12 are increased.

Furthermore, since the bent portions 11a and 12a of the positive electrode lug portion 11 and the negative electrode lug portion 12 and the linking portions 162 and 172 of the positive electrode terminal component 160 and the negative electrode terminal component 170 are arranged inside the recesses 151 and 152 of the lid 150, and the inside of the recesses 151 and 152 is sealed with the synthetic resin 155, the linking portions 162 and 172 (connection portions with the bent portions 11a and 12a) have a structure that makes it difficult to corrode from the outside.

In addition, since the positive electrode terminal component 160 and the negative electrode terminal component 170 include the intermediate portions 163 and 173 including the V-shaped grooves (surfaces lower than the upper surfaces of the linking portions) 163a and 173a between the terminal portions 161 and 171 and the linking portions 162 and 172, a structure that makes it difficult for the electrolytic solution that has reached the bent portions 11a and 12a of the positive electrode lug portion 11 and the negative electrode lug portion 12 to arrive at the terminal portions 161 and 171 is achieved.

In addition, since the width W2 of the linking portions 162 and 172 of the positive electrode terminal component 160 and the negative electrode terminal component 170 in a plan view is the same as or larger than the widths of the bent portions 11a and 12a of the positive electrode lug portion 11 and the negative electrode lug portion 12, a structure that makes it difficult for the electrolytic solution that has reached the bent portions 11a and 12a of the positive electrode lug portion 11 and the negative electrode lug portion 12 to arrive at the terminal portions 161 and 171, as compared with a case where the width W2 is smaller, is achieved.

In addition, since the terminal portions 161 and 171 of the positive electrode terminal component 160 and the negative electrode terminal component 170 include the protrusion portions 164 and 174 that protrude from a plane including outer surfaces (surfaces on an opposite side of the surrounding portions) of the linking portions 162 and 172, and the protrusion portions 164 and 174 include the narrowed portions 165 and 175, a structure that makes it difficult for the electrolytic solution that has reached lower portions of the terminal portions 161 and 171 to arrive at the connection surfaces 161a and 171a, as compared with a case where the terminal portions do not include the narrowed portions 165 and 175, is achieved.

In addition, since the width W3 of the intermediate portions 163 and 173 of the positive electrode terminal component 160 and the negative electrode terminal component 170 in a plan view is formed narrower than the width W2 of the linking portions 162 and 172 in a plan view (W3 < W2), a structure that makes it difficult for the electrolytic solution that has reached the bent portions 11a and 12a of the positive electrode lug portion 11 and the negative electrode lug portion 12 to arrive at the terminal portions 161 and 171, as compared with the case of W3 ≥ W2, is achieved.

From the above, the bipolar lead-acid storage battery 100 of the first embodiment has a structure that not only makes it difficult for the linking portions 162 and 172 (the connection portions with the bent portions 11a and 12a of the positive electrode lug portion 11 and negative electrode lug portion 12) of the positive electrode terminal component 160 and the negative electrode terminal component 170 to corrode, but also makes it difficult for the terminal portions 161 and 171 of the positive electrode terminal component 160 and the negative electrode terminal component 170 to corrode is achieved.

### [Second Embodiment]

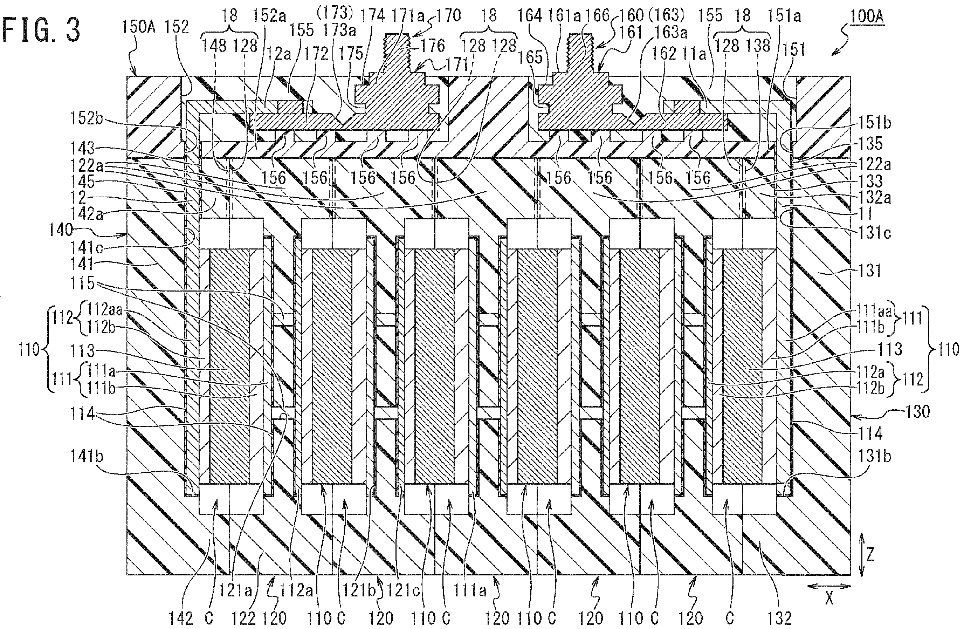

As illustrated in FIG. 3, a bipolar lead-acid storage battery 100A of a second embodiment is the same as the bipolar lead-acid storage battery 100 of the first embodiment except for a part thereof, and thus different points will be described below.

A lid 150A constituting the bipolar lead-acid storage battery 100A of the second embodiment includes a plurality of projections 156 at positions on upper surfaces of bottom plates 151a and 152a of recesses 151 and 152 where a positive electrode terminal component 160 and a negative electrode terminal component 170 are arranged. A dimension in the Z direction of the lid 150A is larger than the dimension in the Z direction of the lid 150 of the first embodiment by an amount equal to the height of the projection 156.

Then, the positive electrode terminal component 160 and the negative electrode terminal component 170 are arranged on top of the plurality of projections 156. The plurality of projections 156 are members forming a space between the positive electrode terminal component 160 and the negative electrode terminal component 170, and the bottom plates 151a and 152a, and a synthetic resin 155 is present in this space. Note that, when the positive electrode terminal component 160 and the negative electrode terminal component 170 are fixed to the inside of the recesses 151 and 152 of the lid 150A with an adhesive at the time of manufacturing, the adhesive runs around into this space.

The bipolar lead-acid storage battery 100A of the second embodiment has the following effects in addition to the actions and effects that the bipolar lead-acid storage battery 100 of the first embodiment has.

In the bipolar lead-acid storage battery 100A of the second embodiment, since the positive electrode terminal component 160 and the negative electrode terminal component 170 are installed on top of the plurality of projections 156 provided on the bottom plates 151a and 152a of the recesses 151 and 152 of the lid 150A, as compared with the bipolar lead-acid storage battery 100 of the first embodiment in which the positive electrode terminal component 160 and the negative electrode terminal component 170 are installed directly on the upper surfaces of the bottom plates 151a and 152a, the amount of the electrolytic solution that arrives at the positive electrode terminal component 160 and the negative electrode terminal component 170 along the upper surfaces of the bottom plates 151a and 152a can be decreased.

In addition, since lower portions of the positive electrode terminal component 160 and the negative electrode terminal component 170 are in a bonded state to the bottom plates 151a and 152a by the synthetic resin 155 present between the plurality of projections 156, the positive electrode terminal component 160 and the negative electrode terminal component 170 are more firmly fixed to the lid than in the bipolar lead-acid storage battery 100 of the first embodiment. Therefore, when external terminals are fastened to the positive electrode terminal component 160 and the negative electrode terminal component 170 by screwing screw shafts 166 and 176 and nuts, the positive electrode terminal component 160 and the negative electrode terminal component 170 can withstand a larger fastening stress and torque.

### [Third Embodiment]

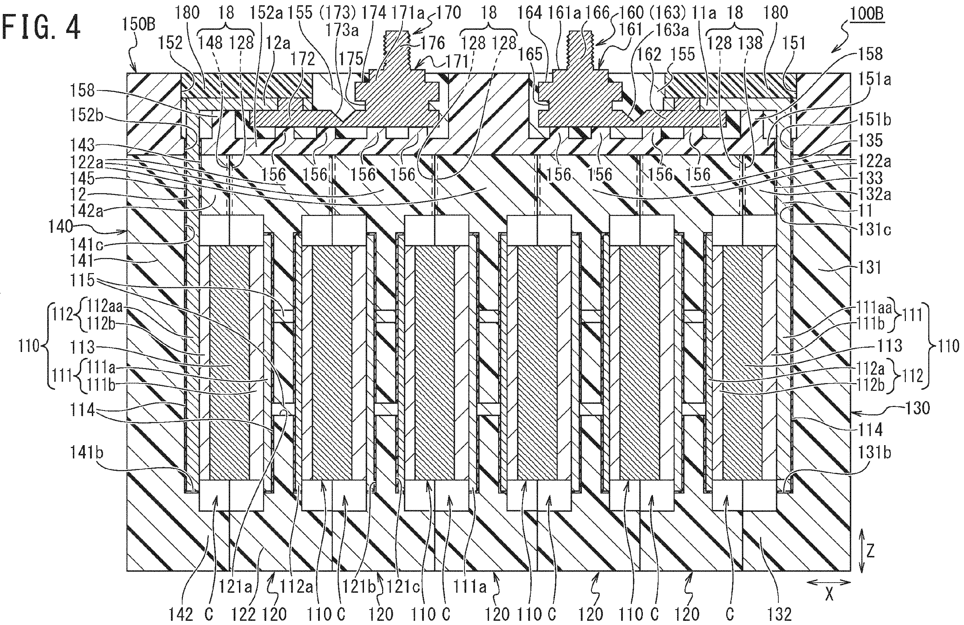

As illustrated in FIG. 4, a bipolar lead-acid storage battery 100B of a third embodiment is the same as the bipolar lead-acid storage battery 100A of the second embodiment except for a part thereof, and thus different points will be described below.

A lid 150B constituting the bipolar lead-acid storage battery 100B of the third embodiment includes ribs 158 at positions on upper surfaces of bottom plates 151a and 152a of recesses 151 and 152 where base portions of bent portions 11a and 12a of a positive electrode lug portion 11 and a negative electrode lug portion 12 (portions behind connection portions with a positive electrode terminal component 160 and a negative electrode terminal component 170) are arranged. The ribs 158 support the bent portions 11a and 12a from a lower side. In addition, the bipolar lead-acid storage battery 100B of the third embodiment includes pressing members 180 configured to press the bent portions 11a and 12a against a side of the ribs 158.

The bipolar lead-acid storage battery 100B of the third embodiment has the following effects in addition to the actions and effects that the bipolar lead-acid storage battery 100A of the second embodiment has.

Since the ribs 158 supporting base portions of the bent portions 11a and 12a from the lower side are installed, the electrolytic solution that has arrived at the base portions of the bent portions 11a and 12a can be restrained from arriving at tip portions of the bent portions 11a and 12a (connection portions with the positive electrode terminal component 160 and the negative electrode terminal component 170), as compared with the bipolar lead-acid storage battery 100 of the first embodiment without such ribs.

In addition, since the bent portions 11a and 12a are supported from the lower side by the ribs 158 and also pushed from an upper side with the pressing members 180, bent states of the bent portions 11a and 12a are favorably maintained. As a result, deformation of the positive electrode lug portion 11 and the negative electrode lug portion 11 when pressure is applied from the outside is restrained. In addition, since the pressing members 180 are present on the upper side of the bent portions 11a and 12a, cracking in a synthetic resin 155 when pressure is applied from the outside to the synthetic resin 155 sealing the recesses 151 and 152 can be prevented.

Note that the lids 150, 150A, and 150B are made of, for example, ABS, and in the third embodiment, after the lid 150B made of ABS is joined to the battery main body to seal between the positive electrode lug portion 11 and the negative electrode lug portion 12 and the through-holes 151b and 152b, the recesses 151 and 152 may be sealed with the synthetic resin 155 after peripheral edge portions of the through-holes 151b and 152b of the bottom plates 151a and 152a are closed, by melting portions of the ribs 158 on sides of the positive electrode lug portion 12 and the negative electrode lug portion 12, using a sealing agent for melting ABS, before bending tip portions of the positive electrode lug portion 11 and the negative electrode lug portion 12.

### [Another Embodiment of Terminal Component]

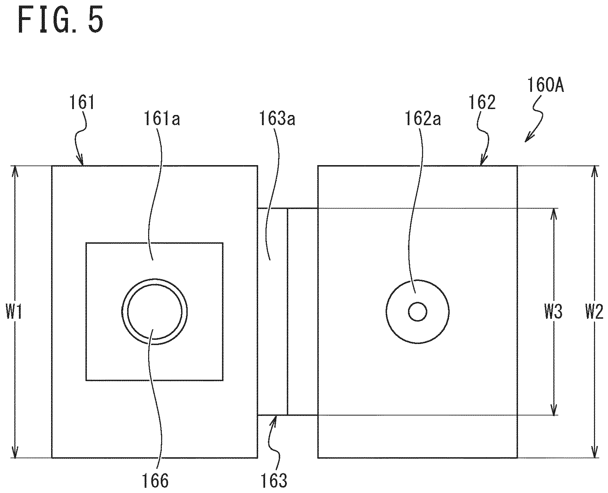

As the positive electrode terminal component and the negative electrode terminal component, as in a terminal component 160A illustrated in FIG. 5, a terminal component may be used in which the width W1 of the terminal portion 161 in a plan view and the width W2 of the linking portion 162 in a plan view are the same, and the width W3 of the intermediate portion 163 in a plan view is smaller than the width W1 of the terminal portion 161 in a plan view. That is, the terminal component 160A is the same as the positive electrode terminal component 160 in FIG. 1 except that the dimensional relationship is W1 = W2 > W3.

The terminal component 160A has a structure that makes it difficult for the electrolytic solution that has arrived at the terminal portions 161 and 171 to arrive at the connection surface 161a, as compared with a terminal component having a dimensional relationship of W1 = W3 < W2. Therefore, by using the terminal component 160A as the positive electrode terminal component 160 and the negative electrode terminal component 170, even when the electrolytic solution has arrived at the terminal portion 161, the connection surface 161a can be avoided from being corroded.

In addition, as the positive electrode terminal component and the negative electrode terminal component, the positive electrode terminal component 160 having a recess instead of the V-shaped groove 163a, or the positive electrode terminal component 160 formed with a groove having an inclined surface (a surface lower than an upper surface of the linking portion) lowering or rising from the linking portion 162 toward the terminal portion 161 (a groove having a right triangular cross section) may be used.

### [Difference between One Aspect and Embodiment of Present Invention]

In the bipolar lead-acid storage battery of each of the above embodiments, the lid 150 having the recesses 151 and 152 is used. However, a lid without a recess may be used, the positive electrode terminal component and the negative electrode terminal component may be installed on an upper surface of the lid (a surface on an opposite side of the battery main body), and the positive electrode lug portion and the negative electrode lug portion penetrating through the lid may be connected with the positive electrode terminal component and the negative electrode terminal component. In these circumstances, it is preferable to seal the connection portions present on an upper surface of the lid with a synthetic resin.

In each of the above embodiments, the bipolar lead-acid storage battery in which the positive electrode current collector plate and the negative electrode current collector plate are made of a lead foil (formed of lead or a lead alloy) has been described, but one aspect of the present invention can also be applied to a bipolar storage battery in which the positive electrode current collector plate and the negative electrode current collector plate are formed of a metal (such as aluminum, copper, or nickel) or an alloy other than lead or a lead alloy, or a conductive resin.

In each of the above embodiments, the respective bent portions of the positive electrode lug portion and the negative electrode lug portion are connected with the positive electrode terminal component and the negative electrode terminal component by thermal welding, but may be connected with the positive electrode terminal component and the negative electrode terminal component by any of welding, caulking, bolt fastening, pressure bonding, and spring fixing. Since these connection forms (thermal welding, welding, caulking, bolt fastening, pressure bonding, spring fixing) are vulnerable to corrosion, the effects obtained by the present invention are higher.

### Reference Signs List

11 Positive electrode lug portion
11a Bent portion of positive electrode lug portion
12 Negative electrode lug portion
12a Bent portion of negative electrode lug portion
100 Bipolar lead-acid storage battery
110 Cell member
111 Positive electrode
112 Negative electrode
111a Positive electrode lead foil
111aa Positive electrode lead foil (positive electrode current collector plate constituting one cell member)
111b Positive active material layer
112a Negative electrode lead foil
112aa Negative electrode lead foil (negative electrode current collector plate constituting one cell member)
112b Negative active material layer
113 Separator
114 Adhesive layer
115 Electrical conductor
120 Biplate (space forming member)
121 Substrate of biplate (substrate covering both side of positive electrode and side of negative electrode of cell member)
121a Through-hole of substrate
121b First recess of substrate
121c Second recess of substrate
122 Frame body of biplate
122a Surrounding portion surrounding one of side surfaces of cell member
128 Groove forming liquid injection hole
130 First end plate (space forming member)
131 Substrate of first end plate (substrate covering one of side of positive electrode and side of negative electrode of cell member)
132 Frame body of first end plate
132a Surrounding portion surrounding one of side surfaces of cell member
135 Synthetic resin sealing through-hole
138 Groove forming liquid injection hole
140 Second end plate (space forming member)
141 Substrate of second end plate (substrate covering one of side of positive electrode and side of negative electrode of cell member)
142 Frame body of second end plate
142a Surrounding portion surrounding one of side surfaces of cell member
145 Synthetic resin sealing through-hole
148 Groove forming liquid injection hole
150 Lid
151 Recess of lid
152 Recess of lid
155 Synthetic resin sealing recess of lid
160 Positive electrode terminal component
161 Terminal portion of positive electrode terminal component
161a Connection surface of positive electrode terminal component
162 Linking portion of positive electrode terminal component
163 Intermediate portion of positive electrode terminal component
164 Protrusion portion of positive electrode terminal component
165 Narrowed portion of positive electrode terminal component
170 Negative electrode terminal component
171 Terminal portion of negative electrode terminal component
171a Connection surface of negative electrode terminal component
172 Linking portion of negative electrode terminal component
173 Intermediate portion of negative electrode terminal component
174 Protrusion portion of negative electrode terminal component
175 Narrowed portion of negative electrode terminal component
18 Liquid injection hole
C Cell (space accommodating cell member)

## Claims

1. A bipolar storage battery comprising:
a plurality of cell members each including a positive electrode including a positive electrode current collector plate and a positive active material layer, a negative electrode including a negative electrode current collector plate and a negative active material layer, and a separator interposed between the positive electrode and the negative electrode, the plurality of cell members being arranged in a stacked manner with intervals; and
a plurality of space forming members configured to form a plurality of spaces for individually accommodating the plurality of cell members,
wherein an electrolytic solution is present in the spaces,
the space forming members each include a substrate configured to cover at least one of a side of the positive electrode or a side of the negative electrode of one of the cell members and a frame body configured to surround all side surfaces of one of the cell members,
the cell members and the substrates of the space forming members are arranged in an alternately stacked state,
the plurality of cell members is electrically connected in series,
the frame bodies being adjacent are joined,
the bipolar storage battery comprises: a lid configured to cover a surrounding portion of the frame body surrounding one of the side surfaces of each cell member; and a positive electrode terminal component and a negative electrode terminal component each including a connection surface exposed to an outer surface of the lid,
the positive electrode current collector plate constituting one of the cell members includes a positive electrode lug portion, and the positive electrode lug portion is connected with the positive electrode terminal component at a point ahead of a location where the positive electrode lug portion penetrates the surrounding portion and the lid, and
the negative electrode current collector plate constituting one of the cell members includes a negative electrode lug portion, and the negative electrode lug portion is connected with the negative electrode terminal component at a point ahead of a location where the negative electrode lug portion penetrates the surrounding portion and the lid.

2. The bipolar storage battery according to claim 1, comprising a through-hole configured to penetrate the surrounding portion and the lid sequentially, wherein the through-hole is sealed with a synthetic resin.

3. The bipolar storage battery according to claim 1 or 2,
wherein the lid includes a recess on a surface opposite to a side of the frame body, and the positive electrode terminal component and the negative electrode terminal component are arranged in the recess, and
each of the positive electrode lug portion and the negative electrode lug portion includes a bent portion at a point ahead of a location where the positive electrode lug portion or the negative electrode lug portion penetrates the surrounding portion and a bottom plate of the recess, and the bent portion is connected with one of the positive electrode terminal component and the negative electrode terminal component.

4. The bipolar storage battery according to claim 3, wherein the bent portion of each of the positive electrode lug portion and the negative electrode lug portion is connected with one of the positive electrode terminal component and the negative electrode terminal component by any of thermal welding, welding, caulking, bolt fastening, pressure bonding, or spring fixing.

5. The bipolar storage battery according to claim 3, wherein the positive electrode terminal component and the negative electrode terminal component are arranged on top of a plurality of projections configured to protrude from the bottom plate of the recess.

6. The bipolar storage battery according to claim 3, wherein the bottom plate of the recess includes a rib configured to support the bent portion.

7. The bipolar storage battery according to claim 6, comprising a through-hole configured to penetrate the surrounding portion and the bottom plate of the recess sequentially, wherein a gap between the rib and a wall surface on a side of the recess on which the through-hole is formed is sealed with a synthetic resin.

8. The bipolar storage battery according to claim 6, comprising a pressing member configured to press the bent portion against a side of the rib.

9. The bipolar storage battery according to claim 3, wherein the recess is sealed with a synthetic resin.

10. A bipolar storage battery comprising:
a plurality of cell members each including a positive electrode including a positive electrode current collector plate and a positive active material layer, a negative electrode including a negative electrode current collector plate and a negative active material layer, and a separator interposed between the positive electrode and the negative electrode, the plurality of cell members being arranged in a stacked manner with intervals; and
a plurality of space forming members configured to form a plurality of spaces for individually accommodating the plurality of cell members,
wherein an electrolytic solution is present in the spaces,
the space forming members each include a substrate configured to cover at least one of a side of the positive electrode or a side of the negative electrode of one of the cell members and a frame body configured to surround all side surfaces of one of the cell members,
the cell members and the substrates of the space forming members are arranged in an alternately stacked state,
the plurality of cell members is electrically connected in series,
the frame bodies being adjacent are joined,
the bipolar storage battery comprises: a lid configured to cover a surrounding portion of the frame body surrounding one of the side surfaces of each cell member; and a positive electrode terminal component and a negative electrode terminal component each including a connection surface exposed to an outer surface of the lid,
the positive electrode current collector plate constituting one of the cell members includes a positive electrode lug portion, and the negative electrode current collector plate constituting one of the cell members includes a negative electrode lug portion,
each of the positive electrode lug portion and the negative electrode lug portion includes a bent portion at a point ahead of a location where the positive electrode lug portion or the negative electrode lug portion penetrates the surrounding portion and the lid,
each of the positive electrode terminal component and the negative electrode terminal component includes a terminal portion including the connection surface and a linking portion configured to connect with the bent portion, in different regions in a plan view,
the bent portion of the positive electrode lug portion is connected with the linking portion of the positive electrode terminal component, and
the bent portion of the negative electrode lug portion is connected with the linking portion of the negative electrode terminal component.

11. The bipolar storage battery according to claim 10, comprising an intermediate portion including a surface lower than a surface of the linking portion on an opposite side of the surrounding portion, between the terminal portion and the linking portion.

12. The bipolar storage battery according to claim 10, wherein the linking portion has a width same as or larger than the width of the bent portion in a plan view.

13. The bipolar storage battery according to claim 10, wherein the terminal portions of the positive electrode terminal component and the negative electrode terminal component include a protrusion portion extending in a thickness direction of the lid, the connection surface is formed at a tip of the protrusion portion, and a narrowed portion is formed at a base portion of the protrusion portion.

14. The bipolar storage battery according to claim 11, wherein the intermediate portion has a width formed narrower than the width of the linking portion in a plan view.

15. The bipolar storage battery according to claim 11, wherein the intermediate portion has a width formed narrower than the width of the linking portion and the terminal portion in a plan view.

16. The bipolar storage battery according to any one of claims 10 to 15,
wherein the lid includes a recess on a surface opposite to a side of the frame body, and the positive electrode terminal component and the negative electrode terminal component are arranged in the recess, and
each of the positive electrode lug portion and the negative electrode lug portion includes a bent portion at a point ahead of a location where the positive electrode lug portion or the negative electrode lug portion penetrates the surrounding portion and a bottom plate of the recess, and the bent portion is connected with the linking portion of one of the positive electrode terminal component and the negative electrode terminal component.
